# EUROPÄISCHE PATENTANMELDUNG

(11) **EP 4 011 660 A1**
(43) Veröffentlichungstag der Anmeldung: **15.06.2022**
(21) Anmeldenummer: 21200873.4
(22) Anmeldetag: 05.10.2021
(51) Int. Cl.: B60G 17/052

(54) **VENTIL**

(30) Priorität: 09.12.2020 DE 102020132840
(71) Anmelder: Vibracoustic SE, 64293 Darmstadt (DE)
(72) Erfinder: SCHWARZ, Helge, 21442 Toppenstedt (DE); WEBER, Michael, 21244 Buchholz (DE)
(74) Vertreter: Patentanwälte Olbricht Buchhold Keulertz

(57) **Zusammenfassung**

Vorgeschlagen wird ein Ventil für eine Luftfeder, umfassend einen Gehäusekörper (4), der von einer Zentrallängsachse (Z) durchsetzt ist und einen Kanal (10) umfasst, wobei der Gehäusekörper (4) eine erste Ventilöffnung (14) aufweist, welche fluidisch an ein Luftfedervolumen (40) anschließbar ist, eine zweite Ventilöffnung (16) aufweist, welche fluidisch an eine Luftzufuhr anschließbar ist, wobei jede Ventilöffnung (14, 16) fluidisch mit dem Kanal (10) verbunden oder wahlweise verbindbar ist, wobei ein Druckbegrenzungsmittel (22), um den aus der zweiten Ventilöffnung (16) einströmenden Fluiddruck zu begrenzen, wobei das Druckbegrenzungsmittel (22) ein drittes Dichtmittel (28) und ein der zweiten Ventilöffnung (16) zugeordnetes und eine Öffnung wahlweise verschließbares zweites Dichtmittel (26) umfasst, welche zwangsgekoppelt sind, wobei eine Druckbeaufschlagung zumindest des dritten Dichtmittels (28) das zweite Dichtmittel (26) aufgrund der Zwangskopplung derart verstellt, dass es die entsprechende Öffnung verschließt oder den effektiven Öffnungsquerschnitt reduziert.

## Beschreibung

Die Erfindung betrifft ein Ventil gemäß dem Oberbegriff von Anspruch 1, sowie die Verwendung eines Ventils gemäß Anspruch 10.

Ventile zum Befüllen eines Volumens sind aus der Praxis bekannt. Beispielsweise können derartige Ventile einem Luftfedervolumen einer Luftfeder zugeordnet sein und einen Luftstrom in das Luftfedervolumen hinein ermöglichen oder verhindern.

Luftfedern können ein Fahrzeug auf einem konstanten Niveau halten, unabhängig davon, wie schwer es beladen ist. Sie können ermöglichen, dass ein Fahrzeug bei hohen Geschwindigkeiten abgesenkt wird, um die Aerodynamik und damit die Reichweite zu verbessern. Luftfedern können auch den Luftstrom unter dem Fahrzeug für die passive Batteriekühlung in Elektrofahrzeugen optimieren. Sie schützen die Batterien bei schlechten Straßenverhältnissen und sichern immer eine minimale Bodenfreiheit. Als Federung von Nutzfahrzeugkabinen eingesetzt, können Luftfedern die Kabine auf einem konstanten Niveau halten, unabhängig vom Eigengewicht oder Beladungszustand der Kabine. Da die Bremsen bei Nutzfahrzeugen pneumatisch betrieben sind, sind die Kompressoren für die Druckluftversorgung bei Nutzfahrzeugen wesentlich leistungsstärker als im Personenkraftverkehr eingesetzte Kompressoren. Wird der für die Bremsversorgung bestimmte Kompressor ebenfalls für die Druckluftversorgung der Luftfeder genutzt, ist hierdurch zwar Druckluft in ausreichender Menge vorhanden, das System zeichnet sich jedoch eher durch Robustheit aus und nicht durch geringe Druckschwankungen.

Die Verwendung von Ventilen in Luftfedern ist zum Beispiel aus der DE 10 2011 114 570 B4 bekannt. Die Ventile werden dabei zum Einlassen von Luft aus einer Luftzufuhr in ein Luftfedervolumen und zum Ablassen von Luft aus dem Luftfedervolumen in eine Umgebung verwendet.

Bisher bekannte Ventile weisen jedoch den Nachteil auf, dass diese oder die Luftfeder bei zu großen Einlassdrücken sowie den daraus resultierenden zu großen Einströmgeschwindigkeiten beschädigt werden können. Die Einlassdrücke können je nach Situation schwanken, insbesondere wenn die Bereitstellung der Druckluft über die robusten Kompressoren für die Versorgung der Bremsen in Nutzfahrzeugen erfolgt. Das Beschädigungspotential betrifft insbesondere in zunehmendem Maße geschweißte Kunststoffteile, wie Luftfedertöpfe oder Abrollkolben oder den Luftfederbalg. Daher steigt in zunehmendem Maße auch die Anforderung an den sicheren Berstdruck und eine Sicherheit gegen Missbrauch. Durch zu schnelle Einströmgeschwindigkeiten kann es insbesondere bei mechanisch gesteuerten Niveauregulierungen zu einem zu hohen Hub der Luftfeder kommen, infolge dessen die Luftfeder beschädigt werden kann.

Aufgabe der Erfindung ist es daher, ein Ventil zu schaffen, welches ein Bersten des Balges der Luftfeder, eine Beschädigung geschweißter Kunststoffteile und einen unerwünscht großen Hub der Luftfeder sicher verhindert.

Hauptmerkmale der Erfindung sind im kennzeichnenden Teil von Anspruch 1 und in Anspruch 10 angegeben. Ausgestaltungen sind Gegenstand der Ansprüche 2 bis 9.

Die Erfindung schlägt ein Ventil für eine Luftfeder vor, umfassend einen Gehäusekörper, der von einer Zentrallängsachse durchsetzt ist und einen Kanal umfasst, wobei der Gehäusekörper eine erste Ventilöffnung aufweist, welche fluidisch an ein Luftfedervolumen anschließbar ist, eine zweite Ventilöffnung aufweist, welche fluidisch an eine Luftzufuhr anschließbar ist, wobei jede Ventilöffnung fluidisch mit dem Kanal verbunden oder wahlweise verbindbar ist, wobei ein Druckbegrenzungsmittel vorgesehen ist, um den aus der zweiten Ventilöffnung einströmenden Fluiddruck zu begrenzen, wobei das Druckbegrenzungsmittel ein drittes Dichtmittel und ein der zweiten Ventilöffnung zugeordnetes und eine Öffnung wahlweise verschließbares zweites Dichtmittel umfasst, welche zwangsgekoppelt sind, wobei eine Druckbeaufschlagung zumindest des dritten Dichtmittels das zweite Dichtmittel aufgrund der Zwangskopplung derart verstellt, dass es die entsprechende Öffnung verschließt oder den effektiven Öffnungsquerschnitt reduziert.

In erfindungsgemäßer Weise umfasst das Ventil daher ein Mittel zur Druckbegrenzung oder - reduzierung, um einen Einlassdruck zu begrenzen oder zu reduzieren. Die Begrenzung kann ein oberer Grenzwert sein, der einen maximalen Einlassdruck definiert, bis zu welchem Luft durch das Ventil strömen kann. Das Ventil kann entlang der Zentrallängsachse nur in eine Richtung, nur in die entgegengesetzte Richtung oder in beide Richtungen durchströmbar sein. Das dritte und das zweite Dichtmittel können entlang des Kanals hintereinander angeordnet sein. Denkbar ist, dass die Schaltcharakteristik des Ventils von der Anströmrichtung des Druckbegrenzungsmittels abhängt.

Denkbar ist, dass ein Fluidstrom ausgehend von der ersten Ventilöffnung zur zweiten Ventilöffnung anliegt. Hier kann eine spontane Schaltcharakteristik realisierbar sein. Untergreift dann der ventileinwärts gerichtete Luftstrom dabei zunächst das dritte Dichtmittel oder wirkt auf dieses ein, welches dem Druckbegrenzungsmittel zugeordnet ist, so wird das zweite Dichtmittel verstellt, welches der zweiten Ventilöffnung zugeordnet ist. Spontan bei Erreichen des von dem Druckbegrenzungsmittel definierten Grenzwertes schließt das Ventil und verhindert dadurch das Einströmen weiterer Luft, deren Druck über dem Grenzwert liegt, also einen Übergrenzwertdruck aufweist. Sofern ein Druck in Höhe des Grenzwertdrucks am Ventil anliegt, führt das Druckbegrenzungsmittel zu einem Verschließen des Ventils und verhindert so ein Einströmen von weiterer Luft in das Ventil. Der Grenzwertdruck kann variabel sein.

Denkbar ist, dass ein Fluidstrom ausgehend der zweiten Ventilöffnung zur ersten Ventilöffnung anliegt. Hier kann eine asymptotische Schaltcharakteristik realisierbar sein. Umströmt dann der ventileinwärtsgerichtete Luftstrom hingegen zunächst das zweite Dichtmittel, bevor es das dritte Dichtmittel untergreift oder darauf einwirkt, so verschließt das zweite Dichtmittel aufgrund der Zwangskopplung die entsprechende Öffnung oder reduziert den effektiven Öffnungsquerschnitt kontinuierlich, so dass die Einströmgeschwindigkeit der Luft nicht proportional zum Differenzdruck zwischen Luftfeder und Luftzufuhr oder Druckluftversorgung ansteigt, sondern einen Grenzwert nicht übersteigen kann. Somit ist die Hubgeschwindigkeit der Luftfeder durch die einströmende Luft begrenzt und bleibt innerhalb von vordefinierbaren Spezifikation.

Das dritte Dichtmittel kann membranartig ausgestaltet oder aber auch eine Membran sein. Das dritte Dichtmittel kann eine dem Kanal zugewandte Fläche aufweisen. Denkbar ist, dass der Luftfederinnendruck den Grenzwert erreicht, so dass auf die dem Kanal zugewandte Einwirkfläche des dritten Dichtmittels ein ausreichend hoher Druck wirkt, um das dritte Dichtmittel so weit zu verstellen oder auszulenken, dass das zweite Dichtmittel die entsprechende Öffnung schließt und so das Einströmen weiterer Luft in den Kanal verhindert.

Die Zwangskopplung kann beispielsweise durch eine mittelbare und unmittelbare Verbindung beider Dichtmittel erfolgen. Das in das Ventil einströmende Fluid kann beispielsweise über die erste Ventilöffnung und/oder die zweite Ventilöffnung führen. Mittels der Erfindung kann eine Funktionstrennung zwischen den beiden Dichtmitteln erfolgen. Während nämlich das zweite Dichtmittel eine Luftpassage verhindert oder einen effektiven Querschnitt zumindest reduziert, geht die dazu verstellende Bewegungskraft von dem dritten Dichtmittel aus.

Das Druckbegrenzungsmittel umfasst das zweite Dichtmittel, welches der zweiten Ventilöffnung zugeordnet ist, um diese bezüglich eines ventileinwärts in Richtung Kanal gerichteten Fluidstroms wahlweise zu öffnen, zu verschließen oder den Querschnitt der Öffnung so zu reduzieren, dass der in das Luftfedervolumen gerichtete Luftstrom begrenzt wird. Das zweite Dichtmittel kann zwischen einer Offenstellung und einer Schließstellung, in welcher es gegen eine Dichtfläche angelegt ist, kontinuierlich verstellbar sein, und jede Stellung dazwischen einnehmen. Ist das zweite Dichtmittel in seine Schließstellung verstellt, ist ein durch die zweite Ventilöffnung führender Fluidstrom unterbrochen. Vorzugsweise erfolgt die Verstellung aus der Offenstellung in die Schließstellung in Richtung der Einlassdruckkraft. Diese Verstellbewegung kann mittels einer einfachen Mechanik realisiert werden.

Der Gehäusekörper kann einteilig aber auch zweiteilig oder mehrteilig ausgebildet sein, wobei zumindest einer der Teile aus einem Kunststoff gebildet sein kann. Das Druckbegrenzungsmittel kann an einem distalen Ende des Gehäusekörpers angeordnet sein, um auch die innere Ventilmechanik vor einem Grenzwertdruck zu schützen. Das Druckbegrenzungsmittel kann vorteilhaft an der zweiten Ventilöffnung angeordnet sein. An die zweite Ventilöffnung kann eine Druckluftzufuhr anschließbar sein.

In vorteilhafter Weise kann das Ventil ein Einlassventil sein, welches in einen Fluidpfad zwischen eine Druckluftzufuhr und ein Luftfedervolumen geschaltet ist oder schaltbar ist, und den Druck der einströmenden Luft begrenzen kann. Dabei kann der Fluidpfad von der ersten Ventilöffnung zur zweiten Ventilöffnung durch das Ventil reichen oder in umgekehrte Richtung.

Denkbar ist, dass das Ventil eine dritte Ventilöffnung aufweist, welche einen Gegendruckraum innerhalb des Gehäusekörpers fluidisch über einen Nebenkanal mit einer Umgebung oder einer Gegendruckquelle verbindet. Dadurch kann ein Umgebungsdruck oder Gegendruck in das Ventil eingeführt und dem Druckbegrenzungsmittel zugeführt werden. Da der Innendruck im Druckbegrenzungsmittel auf einer Seite einer zweiten Feder den Grenzwertdruck unmittelbar beeinflussen kann, sollte der Innendruck in vorteilhafter Weise möglichst konstant sein. Daher ist es vorteilhaft, wenn das Druckbegrenzungsmittel den Gegendruckraum umfasst. Denkbar ist jedoch auch, dass der Gegendruckraum von dem Gehäusekörper oder der Luftfeder ausgebildet und/oder von einem künstlich eingestellten Referenzdruck oder einer Mischung aus diesen Drücken druckbeaufschlagt wird.

In vorteilhafter Ausgestaltung erfolgt eine Betätigung des Druckbegrenzungsmittels in Abhängigkeit einer Druckdifferenz zwischen einem Umgebungsdruck und einem Einlassdruck. Der Umgebungsdruck kann an der dritten Ventilöffnung anstehen, der Einlassdruck kann an der zweiten Ventilöffnung anstehen. Der Differenzdruck oder Betätigungsdruck kann von einem Betätigungsmittel beeinflussbar sein, wie beispielsweise einem Kraftspeichermittel. Denkbar ist eine gleiche Wirkrichtung der Druckkraft des Umgebungsdrucks und des Betätigungsmittels.

In einer vorteilhaften Ausgestaltung liegen sich die erste Ventilöffnung und die zweite Ventilöffnung bezüglich des Gehäusekörpers gegenüber. Sie können also an den Stirnseiten des vorzugsweise zylindrischen Gehäusekörpers angeordnet sein. Vorteilhaft ist die dritte Ventilöffnung an der Umfangsfläche des Gehäusekörpers angeordnet. Dies führt zu einem geringen Bauraumbedarf, insbesondere einem kleinen Durchmesser, da der Gehäusekörper entlang seiner Zentrallängsachse nur einen Kanal aufweisen muss. Davon kann ein Kanal oder Nebenkanal zur dritten Ventilöffnung abragen, vorzugsweise im rechten Winkel.

Gemäß einer Ausführungsform des Ventils ist ein erstes Dichtmittel vorgesehen, welches vorzugsweise von einem Stößel getragen ist, der entlang der Zentrallängsachse verstellbar ist. Es kann der ersten Ventilöffnung zugeordnet sein, um diese wahlweise zu öffnen oder zu verschließen. Das erste Dichtmittel kann daher bei Bewegung des Stößels den Kanal zu einem Luftfedervolumen hin öffnen oder schließen. Der Stößel kann von einem Steuerungsmittel zu seiner Verstellung entlang oder parallel zu der Zentrallängsachse betätigt werden. Das erste Dichtmittel verhindert einen ungewollten Lufteintritt in das Luftfedervolumen. Der Stößel kann mit dem Dichtmittel gemeinsam durch die Kraft eines Kraftspeichermittels, wie beispielsweise einer Feder, sowie alternativ oder zusätzlich aufgrund des Differenzdrucks zwischen Druckluftzufuhr und Luftfederinnendruck in eine Schließstellung vorgespannt sein. Für eine Ausführungsform mit Stößel gilt: solange das Ventil geöffnet ist, das heißt solange der Stößel in das Ventil hineingedrückt wird und in Folge dessen das erste Dichtmittel nicht länger dichtet, liegt auch in der geschlossenen Position des zweiten Dichtmittels der Luftfederinnendruck an der Einwirkfläche eines dritten Dichtmittels an. Dieses führt dazu, dass ein weiteres Einströmen von Luft in die Luftfeder verhindert wird, sobald ein Luftfederinnendruck erreicht ist, der das zweite Dichtmittel in die geschlossene Stellung überführt. Die geschlossene Stellung des zweiten Dichtmittels wird daher auch unabhängig vom Einlassdruck gehalten, solange die Luftfeder den definierten Grenzwertdruck aufweist.

In einer vorteilhaften Ausgestaltung kann das Druckbegrenzungsmittel im Kanal angeordnet sein und/oder fluidisch zwischen zumindest zwei der Ventilöffnungen angeordnet sein. Dadurch ist das Druckbegrenzungsmittel bauraumsparend im Gehäusekörper anordbar. In vorteilhafter Weise führt der Kanal durch das Druckbegrenzungsmittel hindurch, so dass kein Bypass ausgebildet ist. Dieses erlaubt die einfache Abdichtung des Nebenkanals gegenüber dem Kanal durch beispielsweise O-Ringe. Denkbar ist alternativ oder zusätzlich, dass auch der Nebenkanal in das Druckbegrenzungsmittel eingeführt wird, so dass das Druckbegrenzungsmittel drei Begrenzungsmittelöffnungen aufweist. Der Kanal kann sich in seinen beiden distalen Endabschnitten entlang der Zentrallängsachse erstrecken und/oder um den Gegendruckraum herum verlaufen. Der Gegendruckraum kann daher von der Luft in dem Kanal umströmt werden.

In einer vorteilhaften Ausgestaltung kann das zweite Dichtmittel fluidstromaufwärts des dritten Dichtmittels angeordnet sein oder das dritte Dichtmittel stromaufwärts des zweiten Dichtmittels angeordnet sein. Je nach Anordnung der Dichtmittel und/oder Durchströmungsrichtung lassen sich unterschiedliche Schaltcharakteristiken realisieren. Bei der ersten Möglichkeit kann eine spontane Schaltcharakteristik realisierbar sein durch schlagartiges Schließen des zweiten Dichtmittels. Bei der zweiten Möglichkeit kann eine asymptotische Schaltcharakteristik realisierbar sein.

Weiterbildungsgemäß kann das Druckbegrenzungsmittel ein Kraftspeichermittel umfassen, vorzugsweise eine Feder, welches das zweite Dichtmittel in seine Offenstellung vorspannt. Das zweite Dichtmittel ist daher "normal-open". Die Feder kann beispielsweise eine Schraubendruckfeder oder ein Tellerfederpaket sein. Die Wirkrichtung des Kraftspeichermittels kann der Einlassdruckrichtung entgegenstehen. Der Kraftspeichermittelkraft entgegen kann die Kraft wirken, welche aus der Einwirkung des Differenzdrucks zwischen Einlassluftdruck und Druck im Gegendruckraum resultiert. Weist die an der zweiten Ventilöffnung anstehende Luft den Grenzwertdruck auf, wird das zweite Dichtmittel in seine Schließstellung oder in Richtung der Schließstellung verstellt. Der an der Einwirkfläche anliegende Druck entspricht nun dem Grenzwertdruck, der nun wiederum dem Luftfederinnendruck entspricht; damit ist der Grenzwertdruck der maximal zulässige Innendruck der Luftfeder.

Denkbar ist, dass über die dritte Ventilöffnung, die fluidisch mit dem Gegendruckraum verbunden ist, ein Umgebungsdruck oder Gegendruck ansteht. Weiterhin ist denkbar, dass im Gegendruckraum ein beliebig geregelter Druck anliegt, über den die Schließcharakteristik des Ventils sowie der Grenzwertdruck definiert werden kann. Der Druck im Gegendruckraum und das Kraftspeichermittel können entlang einer gemeinsamen Wirkungslinie agieren.

In einer vorteilhaften Ausgestaltung kann das Druckbegrenzungsmittel das dritte Dichtmittel umfassen, welches der dritten Ventilöffnung zugeordnet ist, um diese bezüglich des Kanals fluiddicht zu verschließen. Das dritte Dichtmittel kann eine Membran sein, die sich in Abhängigkeit des an ihren Seiten anstehenden Differenzdrucks verformen kann. Das dritte Dichtmittel trennt den Kanal fluiddicht gegenüber dem Gegendruckraum und/oder dem Nebenkanal. Das zweite Dichtmittel kann eine Verstellung des Druckbegrenzungsmittels ermöglichen, jedoch zugleich verhindern, dass sich die Fluide aus dem Kanal und dem Gegendruckraum und/oder Nebenkanal vermischen oder es zu einem Druckausgleich kommt. Das zweite Dichtmittel kann zwei unterschiedliche Druckbereiche flexibel voneinander abgrenzen.

In einer vorteilhaften Ausgestaltung kann das dritte Dichtmittel und/oder ein viertes Dichtmittel vorgesehen sein, welches der zweiten Ventilöffnung zugeordnet ist, um diese bezüglich eines ventilauswärts gerichteten Fluidstroms wahlweise zu öffnen oder zu verschließen. Dadurch kann eine Restdruckhaltefunktion ermöglicht werden, sollte der Einlassluftdruck geringer als der Luftfederinnendruck und das erste Dichtmittel in eine Offenstellung überführt sein. Das dritte Dichtmittel und/oder das vierte Dichtmittel verhindern einen Fluidstrom aus dem Ventil oder dem Kanal über die zweite Ventilöffnung. Durch die Integration einer Restdruckhaltefunktion kann zu jeder Zeit eine definierte Menge an Fluid in dem Luftkammervolumen verbleiben, so dass stets ein gewisser Restdruck in dem Luftkammervolumen erhalten bleibt. Dadurch wird ein druckloses Zusammendrücken bzw. Auseinanderziehen des Luftfederbalgs vermieden, so dass der Luftfederbalg vor einer Beschädigung geschützt ist. Durch die integrierte Einheit aus Einlassventil, Druckhaltefunktion und Restdruckhalteventil wird ein einfaches und kostengünstiges Ventil geschaffen, dass einerseits die Funktion des Einlassventils für die Niveauregulierung beibehält, und andererseits die Luftfeder vor Beschädigungen schütz, indem es für einen vorgegebenen Restdruck in der Luftfeder sorgt diese aber gleichzeitig vor einem Übergrenzwertdruck schützt. Das dritte Dichtmittel und/oder das vierte Dichtmittel können mittels eines Kraftspeichermittels, wie beispielsweise einer Feder in die ventilauswärts verschließende Schließstellung vorgespannt sein.

In einer vorteilhaften Ausgestaltung kann das dritte Dichtmittel oder das vierte Dichtmittel in der die zweite Ventilöffnung ventilauswärts verschließenden Schließstellung an einer Dichtfläche anliegen. Die Dichtfläche kann beispielsweise von einem Distanzelement ausgebildet werden, wie beispielsweise einem Dichtkragen. Das Distanzelement kann das dritte Dichtmittel oder das vierte Dichtmittel von einer Fläche beabstanden, an welcher das dritte Dichtmittel oder das vierte Dichtmittel andernfalls anliegen würde. Alternativ oder ergänzend kann das dritte oder das vierte Dichtmittel mindestens eine Dichtlippe aufweisen, welche an der Dichtfläche in der geschlossenen Stellung zur Anlage kommt. Dadurch kann das dritte Dichtmittel oder das vierte Dichtmittel eine Druckangriffsfläche ausbilden, auf die unter Druck stehende Luft einwirken kann, um das dritte Dichtmittel oder das vierte Dichtmittel aus der Anlage an der Dichtfläche in die Offenstellung zu verstellen. Das dritte Dichtmittel oder das vierte Dichtmittel können von der unter Druck stehenden Luft untergriffen werden.

In einer vorteilhaften Ausgestaltung kann das Druckbegrenzungsmittel ein Stellmittel umfassen, welches das zweite Dichtmittel und/oder das dritte Dichtmittel und/oder das vierte Dichtmittel tragen und/oder von dem Kraftspeichermittel des Druckbegrenzungsmittels vorgespannt sein kann. Das Stellmittel kann entlang der Zentrallängsachse verstellbar gelagert sein. Das Stellmittel kann schwimmend gelagert sein, vorzugsweise von dem Druckbegrenzungsmittel. Die Dichtmittel können stoffeinheitlich mit dem Stellmittel ausgebildet sein oder damit verbunden sein. Das Stellmittel kann in kostengünstiger Weise ein Spritzgussteil sein, vorzugsweise aus Kunststoff. Mittels des Stellmittels kann eine Verstellbewegung zugleich auf mehrere Dichtmittel übertragen werden. Es findet eine zwangsgekoppelte Bewegung statt. Dadurch erfolgt zudem eine Funktionsintegration in das Stellmittel und eine Bauteilanzahlreduktion. Das Stellmittel kann einen Anlageabschnitt für das Kraftspeichermittel aufweisen, wie beispielsweise einen Stellmittelboden, welcher vorzugsweise von einem Zylinderabschnitt umfangsseitig begrenzt ist. Dieser Hohlzylinderabschnitt kann dann eine Aufnahme für das Kraftspeichermittel oder die Feder ausbilden. Davon kann ein Dornabschnitt entlang der Zentrallängsachse abragen, welcher eines oder mehrere Dichtmittel tragen und/oder ausbilden kann. Der Dornabschnitt kann die Zwangskopplungsfunktion realisieren. Das Stellmittel weist dann eine längsschnittliche Stimmgabelform auf.

Denkbar ist, dass das erste und/oder das zweite und/oder das dritte und/oder das vierte Dichtmittel des Ventils Elastomerkörper, thermoplastische Elastomerkörper und/oder Kunststoffkörper sind. Derartige Materialien weisen gute Dichteigenschaften auf und sind in einfacher Weise zu verarbeiten. Elastomerdichtungen können beispielsweise aufvulkanisiert werden und Kunststoffkörper oder thermoplastische Elastomerkörper können aufgespritzt werden. Dichtmittel können jedoch auch separat hergestellt werden.

Die Erfindung betrifft zudem die Verwendung eines erfindungsgemäßen Ventils als Einlassventil oder Kombiventil, vorzugsweise als Einlassventil oder Kombiventil einer Luftfeder, vorzugsweise einer Luftfeder eines Fahrzeuges, insbesondere Straßenfahrzeuges. Ein Kombiventil kann ein Einlassventil sein, welches auch zu hohe Drücke in entgegengesetzte Richtung ablassen kann. Beispielsweise kann es zu hohe Innendrücke aus einem Luftfedervolumen ablassen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Längsschnittansicht durch ein erfindungsgemäßes Ventil nach einer ersten Ausführungsform;
- Fig. 2a: eine Längsschnittansicht durch ein erfindungsgemäßes Ventil nach einer zweiten Ausführungsform in einer ersten Stellung;
- Fig. 2b: eine Längsschnittansicht durch ein erfindungsgemäßes Ventil nach einer zweiten Ausführungsform in einer zweiten Stellung;
- Fig. 3: eine Längsschnittansicht durch ein erfindungsgemäßes Ventil nach einer vierten Ausführungsform;
- Fig. 4: eine Längsschnittansicht durch ein erfindungsgemäßes Ventil nach einer fünften Ausführungsform und
- Fig. 5: eine Längsschnittansicht durch ein erfindungsgemäßes Ventil nach einer sechsten Ausführungsform.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

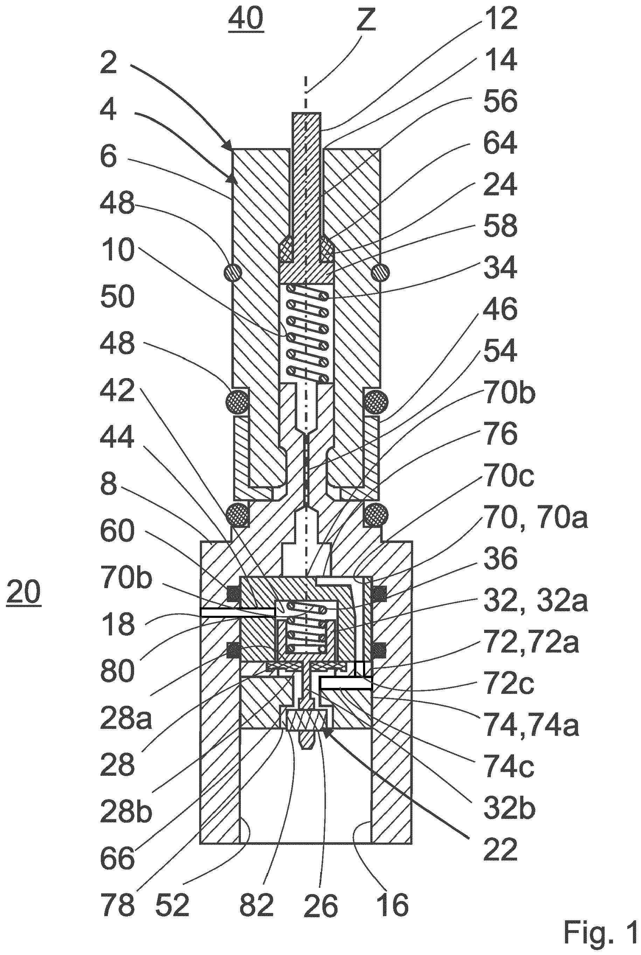

In Fig. 1 ist ein Ventil 2 in bevorzugter Ausführung als Federventil gezeigt, wobei die Federn in Richtung einer das Ventil 2 zentral durchsetzenden Zentrallängsachse Z wirken. Über die Federkräfte kann auf einfache und zuverlässige Weise die Öffnungs- und Schließkraft in Abhängigkeit vom Differenzdruck eingestellt werden.

Das Ventil 2 in Fig. 1 erstreckt sich entlang der Zentrallängsachse Z. Dabei umfasst das Ventil 2 einen Gehäusekörper 4, welcher ein erstes Gehäuseteil 6 und ein zweites Gehäuseteil 8 umfasst. Die Gehäuseteile 6, 8 sind jeweils buchsenartig ausgebildet und können aus einem Kunststoff hergestellt sein. Das zweite Gehäuseteil 8 greift in das erste Gehäuseteil 6 ein, wobei der Eingriff bei entsprechender Anpassung der Gehäuseteile 6, 8 auch grundsätzlich umgekehrt erfolgen kann. Außenumfangsseitig sind die Gehäuseteile 6, 8 mittels eines Klemmrings 46 aneinander fixiert. Außenumfangsseitig trägt der Gehäusekörper 4 in Ausnehmungen oder Rücksprüngen diverse Dichtungen 48, welche vorliegend als O-Ringe ausgebildet sind.

Jedes Gehäuseteil 6, 8 weist einen sich entlang der Zentrallängsachse Z erstreckenden Aufnahmeraum 50, 52 auf. Stirnseitig weist das erste Gehäuseteil 6 eine erste Ventilöffnung 14 auf. Die erste Ventilöffnung 14 kann fluidisch an ein Luftfedervolumen 40 anschließbar sein. Ebenso weist das zweite Gehäuseteil 8 stirnseitig eine zweite Ventilöffnung 16 auf oder umfasst diese, über die eine Luftzufuhr anschließbar ist. Im dargestellten Einlassventil wird über die zweite Ventilöffnung 16 Luft in das Ventil 2 eingeführt, um diese in das Luftfedervolumen 40 zu führen. Zudem bildet das zweite Gehäuseteil 8 einen Durchtrittskanal 54 zur fluidischen Verbindung der beiden Aufnahmeräume 50, 52 aus. Die beiden Ventilöffnungen 14, 16 sind über einen Kanal 10 fluidisch miteinander verbunden, wobei sich der Kanal 10 durch das Ventil 2 hindurch erstreckt.

Der Kanal 10 wird umfangsseitig in einem Abschnitt von der Wandung des ersten Gehäuseteils 6 begrenzt. In dem Aufnahmeraum 50 des ersten Gehäuseteils 6 und somit im Kanal 10 ist ein Stößel 12 geführt, welcher mit seinem Schaft 56 über die erste Ventilöffnung 14 in den Aufnahmeraum 50 einragt. In dem Aufnahmeraum 50 ist ein Kopf 58 des Stößels 12 geführt, welcher in den Kanal 10 hinein gedrückt wird, um das Ventil 2 zum Luftfedervolumen 40 hin zu öffnen. Der Stößel 12 trägt ein erstes Dichtmittel 24, welches als Elastomerkörper ausgebildet ist und der ersten Ventilöffnung 14 zugeordnet ist, um diese wahlweise zu öffnen oder zu verschließen. Dazu ist der Stößel 12 entlang der Zentrallängsachse Z verschiebbar geführt. Dargestellt ist die Schließstellung des ersten Dichtmittels 24, in welcher es an einer Dichtfläche 64 fluiddicht anliegt, um einen weiteren Lufteintritt in das Luftfedervolumen 40 zu verhindern. Die Dichtfläche 64 des ersten Gehäuseteils 6 bildet auch einen ersten Dichtsitz aus. In Offenstellung ist der Stößel 12 in der Bildebene abwärts verstellt und das erste Dichtmittel 24 von der Dichtfläche 64 abgehoben. Über nicht dargestellte Kanäle kann dann ein Fluid den Kopf 58 passieren.

In dem Aufnahmeraum 50 ist zudem eine erste Feder 34 als Kraftspeichermittel angeordnet. Die Feder 34 ist vom Typ einer Schraubendruckfeder. Die Feder 34 stützt sich einends an dem zweiten Gehäuseteil 8 und anderenends an dem Kopf 58 des Stößels 12 ab. Der Stößel 12 ist mit dem ersten Dichtmittel 24 gemeinsam mittels der ersten Feder 34 in die Schließstellung vorgespannt.

In dem Aufnahmeraum 52 ist ein zweites Dichtmittel 26 angeordnet, welches als Elastomerkörper ausgebildet ist und der zweiten Ventilöffnung 16 zugeordnet ist, um diese wahlweise zu öffnen oder zu verschließen. Dargestellt ist die Offenstellung des zweiten Dichtmittels 26, in welcher es gegenüber einer zweiten Dichtfläche 66 distanziert ist, um einen Fluidstrom in den Kanal 10 zu ermöglichen. Die Dichtfläche 66 eines dritten Zylinderelements 74 bildet auch einen zweiten Dichtsitz aus. In Schließstellung ist das zweite Dichtmittel 26 in der Bildebene aufwärts verstellt und liegt an der Dichtfläche 66 an. Zur Bauraumreduzierung ist das zweite Dichtmittel 26 in einer Dichtmittelausnehmung 82 des dritten Zylinderelements 74 angeordnet.

In dem Aufnahmeraum 52, durch welchen der Kanal 10 ebenfalls führt, ist ein Druckbegrenzungsmittel 22 angeordnet. Das Druckbegrenzungsmittel 22 dient der Begrenzung eines aus der zweiten Ventilöffnung 16 in den Kanal 10 einwirkenden Fluiddrucks. In der dargestellten Ausführung umfasst das Druckbegrenzungsmittel 22 drei aneinander anliegende Zylinderelemente 70, 72, 74, welche vorzugsweise in den Aufnahmeraum 52 eingepresst sind. Die Mehrteiligkeit dient der einfachen Herstellung des Druckbegrenzungsmittels 22 und der einfachen Montage im Aufnahmeraum 52. Die drei Zylinderelemente 70, 72, 74 können jeweils ein Metall- oder Kunststoffteil sein. Das erste Zylinderelement 70 ist topfartig ausgebildet und weist neben einer umfangsseitigen Zylinderwandung 70a einen rechtwinklig dazu verlaufenden Zylinderboden 70b auf. Das zweite und dritte Zylinderelement 72, 74 ist jeweils ringförmig ausgebildet und umfasst jeweils lediglich eine jeweilige Zylinderwandung 72a, 74a, wobei sie somit in Richtung der Zentrallängsachse Z fluiddurchströmbar sind.

Der Gegendruckraum 42 im ersten Zylinderelement 70 sowie der Nebenkanal 44 sind über zwei in Ausnehmungen angeordnete Dichtungen 60, welche als O-Ringe ausgebildet sind, gegenüber dem Kanal 10 im zweiten Gehäuseteil 8 abgedichtet. Der Gegendruckraum 42 ist über einen Nebenkanal 44, welcher sich durch die Zylinderwandung 70a und die Wandung des zweiten Gehäuseteils 8 erstreckt, mit einer Umgebung 20 des Ventils 2 verbunden. In der Umgebung 20 herrscht Umgebungsdruck. Hierzu weist das Ventil 2 an seinem Außenumfang eine dritte Ventilöffnung 18 auf, welche als Bohrung oder Nut, sich vorzugsweise umfangsseitig erstreckend, ausgebildet sein kann. Der Gegendruckraum 42 ist gegenüber dem Kanal 10 mittels eines dritten Dichtmittels 28 fluidisch abgedichtet, welches als Elastomermembran ausgebildet ist. In dem Gegendruckraum 42 herrscht daher der in der Umgebung 20 vorliegende Druck.

Das dritte Dichtmittel 28 ist umfangsseitig in einer Ringnut des zweiten Zylinderkörpers 72 aufgenommen und wird von diesem dichtend gegen den ersten Zylinderkörper 70 gepresst. Das dritte Dichtmittel 28 weist daher eine erste Einwirkfläche 28a auf, welche dem Gegendruckraum 42 zugewandt ist, wobei die dortigen Druckverhältnisse und die Federkraft einer Feder 36 auf die Einwirkfläche 28a unmittelbar oder zumindest mittelbar einwirken. Das dritte Dichtmittel 28 weist zudem eine zweite Einwirkfläche 28b auf, welche dem Kanal 10 zugewandt ist, wobei die dortigen Druckverhältnisse auf die Einwirkfläche 28b unmittelbar oder zumindest mittelbar einwirken. Die Verformung des dritten Dichtmittels 28 ist somit unmittelbar von den Druckverhältnissen in dem Gegendruckraum 42 und dem Kanal 10 abhängig.

Das Druckbegrenzungsmittel 22 umfasst ein Stellmittel 32, welches entlang der Zentrallängsachse Z verschiebbar ist. Dazu ist es schwimmend von dem ersten Zylinderelement 70 geführt. Das Stellmittel 32 weist einen Hohlzylinderabschnitt 22a auf, der seiner Führung dient und im Gegendruckraum 42 angeordnet ist. Davon rechtwinklig und entlang der Zentrallängsachse Z abragend umfasst das Stellmittel 22 zudem einen Dornabschnitt 22b, welcher das dritte Dichtmittel 28 durchsetzt. Das Stellmittel 32 weist daher eine längsschnittliche Stimmgabelform auf. Der Dornabschnitt 22b trägt das zweite Dichtmittel 26 und das dritte Dichtmittel 28, welche dort anvulkanisiert oder angespritzt sein können.

In dem Gegendruckraum 42 ist die zweite Feder 36 als Kraftspeichermittel angeordnet. Die Feder 36 ist vom Typ einer Schraubendruckfeder. Die Feder 36 stützt sich einends an dem Stellmittel 32 und anderenends an dem Zylinderboden 70b ab. Das Stellmittel 32 ist somit mit dem zweiten Dichtmittel 26 und dem dritten Dichtmittel 28 mittels der zweiten Feder 36 in die Offenstellung des zweiten Dichtmittels 26 vorgespannt. Der Hohlzylinderabschnitt 32a bildet eine Aufnahme für die zweite Feder 36.

Das Druckbegrenzungsmittel 22 umfasst eine erste Begrenzungsmittelöffnung 76, welche das Druckbegrenzungsmittel 22 über den Kanal 10 mit der ersten Ventilöffnung 14 fluidisch verbindet. Das Druckbegrenzungsmittel 22 umfasst eine zweite Begrenzungsmittelöffnung 78, welche das Druckbegrenzungsmittel 22 über den Kanal 10 mit der zweiten Ventilöffnung 16 fluidisch verbindet. Zudem umfasst das Druckbegrenzungsmittel 22 eine dritte Begrenzungsmittelöffnung 80, welche das Druckbegrenzungsmittel 22 über den Nebenkanal 44 mit der dritten Ventilöffnung 18 fluidisch verbindet. Das Druckbegrenzungsmittel 22 umfasst daher ebenfalls drei Öffnungen.

Der Kanal 10 erstreckt sich durch das Druckbegrenzungsmittel 22 zwischen der ersten Begrenzungsmittelöffnung 76 und der zweiten Begrenzungsmittelöffnung 78 hindurch. Hierzu weist das erste Zylinderelement 70 einen Kanalabschnitt 70c, das zweite Zylinderelement 72 einen Kanalabschnitt 72c und das dritte Zylinderelement 74 einen Kanalabschnitt 74c auf, wobei die Kanalabschnitte 70c, 72c, 74c mit dem jeweils benachbarten Kanalabschnitt 70c, 72c, 74c fluidisch verbunden sind. Die Kanalabschnitte 70c, 72c, 74c können als Bohrungen ausgebildet sein. Die Kanalabschnitte 70c, 72c, 74c können vor Anordnung des Druckbegrenzungsmittels 22 in dem Aufnahmeraum 52 eingebracht oder ausgebildet sein. Ersichtlich ist daher, dass der Kanal 10, der die Ventilöffnungen 14 und 16 miteinander verbindet, um den Gegendruckraum 42 herum verläuft. Der Verlauf der Kanals 10 weicht daher im Bereich des Gegendruckraums 42 von der Zentrallängsachse Z ab. Der Gegendruckraum 42 ist somit von der Luft in dem Kanal 10 umströmt. Dadurch ist der Gegendruckraum 42, das zweite Dichtmittel 26 und das dritte Dichtmittel 28 frontal in die entlang der Zentrallängsachse Z einströmenden Luft unter Einlassdruck gebracht und daher dem Einlassdruck frontal exponiert.

Der Umgebungsdruck in dem Gegendruckraum 42 und die zweite Feder 36 wirken auf einer gemeinsamen Wirkungslinie entlang der Zentrallängsachse Z auf das dritte Dichtmittel 28 ein. In entgegengesetzte Richtung kann eine Einlassdruckkraft wirken, die wahlweise von einer Luftzufuhr über die zweite Ventilöffnung 16 ausgeht. Die Kraft der zweiten Feder 36 und die durch den Umgebungsdruck auf die Einwirkfläche 28a entstehende Kraft addieren sich zu einer in der Bildebene nach unten gerichteten Kraft. Das zweite Dichtmittel 26 wird erst dann in Anlage gegen die Dichtfläche 66 in seine Schließstellung verstellt, wenn die durch den über die zweite Ventilöffnung 16 einströmenden Einlassdruck auf die Wirkfläche 28b resultierende, in der Bildebene nach oben gerichtete Gegenkraft die nach unten gerichtete Gesamtkraft aus Umgebungsdruck und Federkraft übersteigt. Dann liegt ein Grenzwertdruck an. Die Verstellung erfolgt daher in Abhängigkeit einer Druckdifferenz zwischen einerseits einem Umgebungsdruck und einer Federkraft und andererseits einem Einlassdruck. Bevor jedoch der Grenzwertdruck erreicht ist, kann das zweite Dichtmittel 26 kontinuierlich in Abhängigkeit der Druckverhältnisse in Richtung der Dichtfläche 66 verstellt werden.

Zum Befüllen des Luftfedervolumens 40 kann ein nicht dargestelltes Steuerungsmittel den Stößel 12 in der Bildebene nach unten verstellen und so von seinem Dichtsitz an der Dichtfläche 64 abheben. Dadurch ist ein Fluidpfad durch den Kanal 10 in das Luftfedervolumen 40 freigegeben. Das Schließen des Ventils 2 erfolgt dadurch, dass das Steuerungsmittel nicht mehr auf den Kolben einwirkt und die Stellkraft der ersten Feder 34 den Stößel 12 in der Bildebene nach oben in die Schließstellung verstellt.

Um Wiederholungen zu vermeiden, werden bezüglich der folgenden Figurenbeschreibungen im Wesentlichen lediglich die Unterschiede zu Figur 1 erläutert.

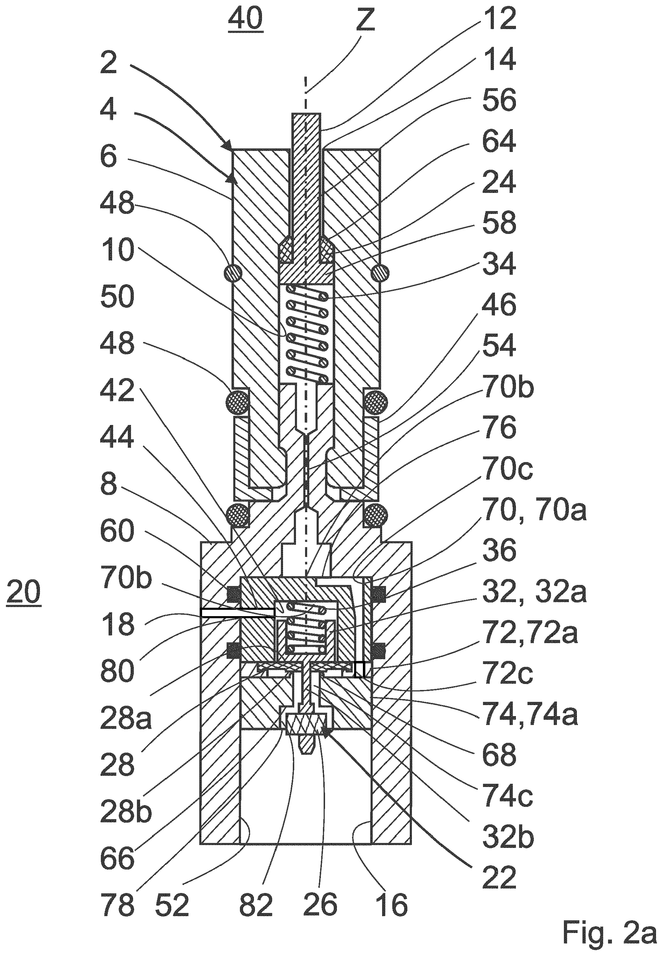

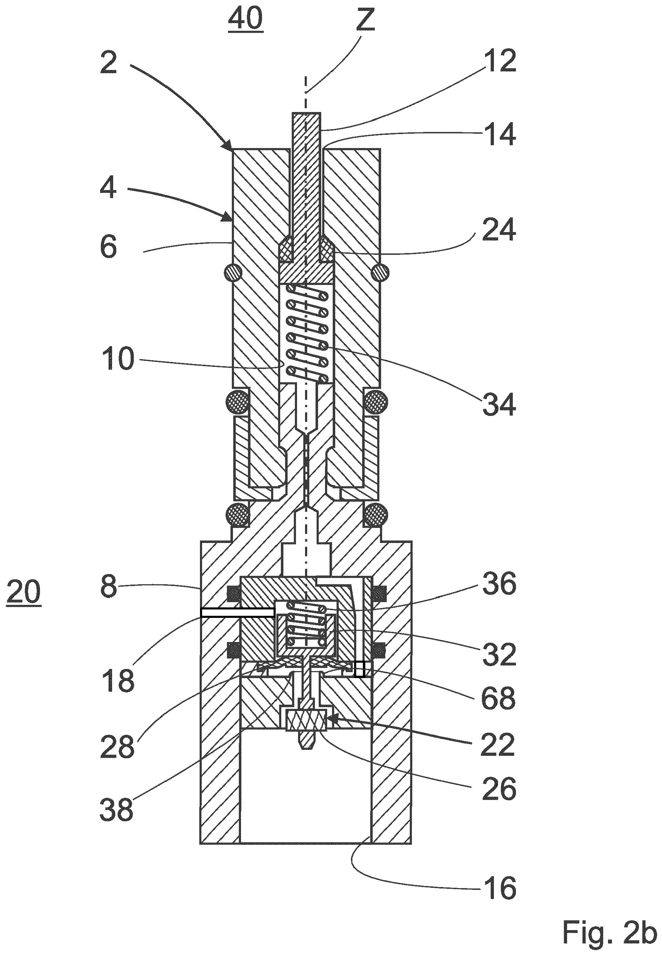

Fig. 2a und 2b zeigen das in Fig. 1 bereits abgebildete Ventil 2, jedoch ist dieses um eine Restdruckhaltefunktion ergänzt. Hierzu weist das dritte Zylinderelement 74 einen Ringkragen 38 auf, welcher einen Abschnitt des Kanalabschnitts 74c umgibt. Die zweite Feder 36 spannt das dritte Dichtmittel 28 gegen den Ringkragen 38 vor. Dort liegt es in seinem "normal-closed"-Zustand an einer dritten Dichtfläche 68 an, die von dem Ringkragen 38 ausgebildet ist. Durch dieses Anliegen ist der Kanal 10 grundsätzlich verschlossen.

Die über die zweite Ventilöffnung 16 einströmende Luft aus der Luftzufuhr kann jedoch das dritte Dichtmittel 28 gegen die Federkraft der zweiten Feder 36 und des Umgebungsdrucks in der Bildebene aufwärts bewegen und so vom Dichtsitz an der Dichtfläche 68 abheben, wie in Fig. 2b gezeigt. Dadurch kann Luft bei entsprechender Stellung des Stößels 12 in das Luftfedervolumen 40 einströmen.

Erkennbar ist, dass das dritte Dichtmittel 18 hier eine Doppelfunktion erfüllt. Es dient der Druckbegrenzungsfunktion und zugleich der Restdruckhaltefunktion.

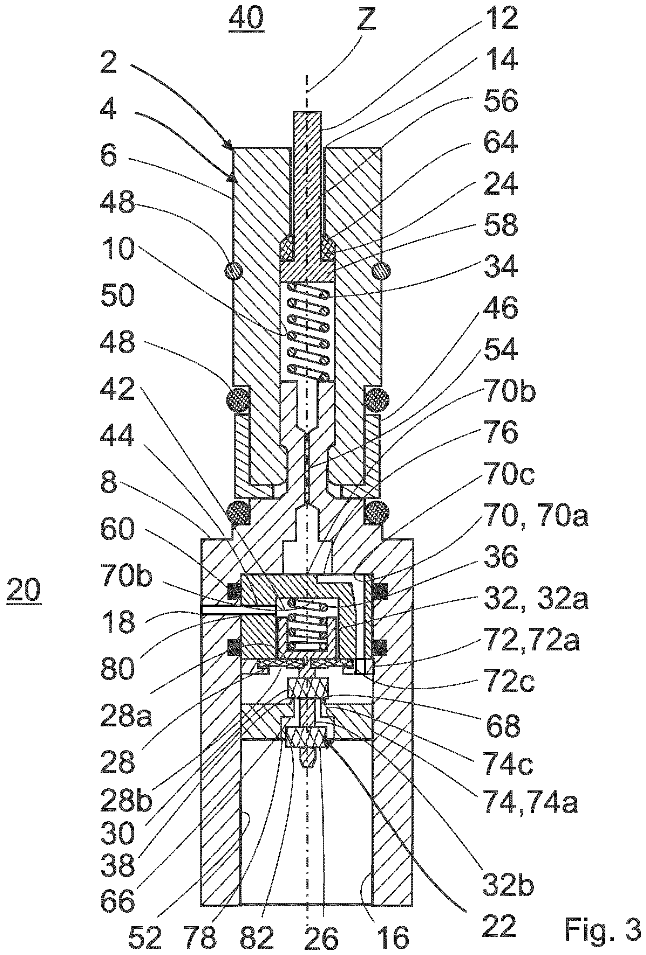

Fig. 3 zeigt das in Fig. 1 bereits abgebildete Ventil 2, jedoch ist dieses ebenfalls um eine Restdruckhaltefunktion ergänzt, wobei hier eine Aufgabentrennung erfolgt. Das dritte Dichtmittel 28 verschließt weiterhin, wie oben bereits ausgeführt, den Gegendruckraum 42 und dient der Druckbegrenzungsfunktion. Nun ist jedoch zusätzlich ein viertes Dichtmittel 30 vorgesehen, welches als Elastomerkörper ausgebildet ist und der zweiten Ventilöffnung 16 zugeordnet ist, um diese wahlweise zu öffnen oder zu verschließen. Das vierte Dichtmittel 30 ist ebenso von dem Dornabschnitt 32b getragen.

Die zweite Feder 36 spannt auch das vierte Dichtmittel 30 gegen den Ringkragen 38 vor. Dort liegt es in seinem "normal-closed"-Zustand an der dritten Dichtfläche 68 an, die von dem Ringkragen 38 ausgebildet ist. Durch dieses Anliegen ist der Kanal 10 grundsätzlich dichtend verschlossen. Das vierte Dichtmittel 30 dient der Restdruckhaltefunktion. Über die zweite Ventilöffnung 16 einströmende Luft hebt das vierte Dichtmittel 30 von seiner Dichtfläche 68 ab.

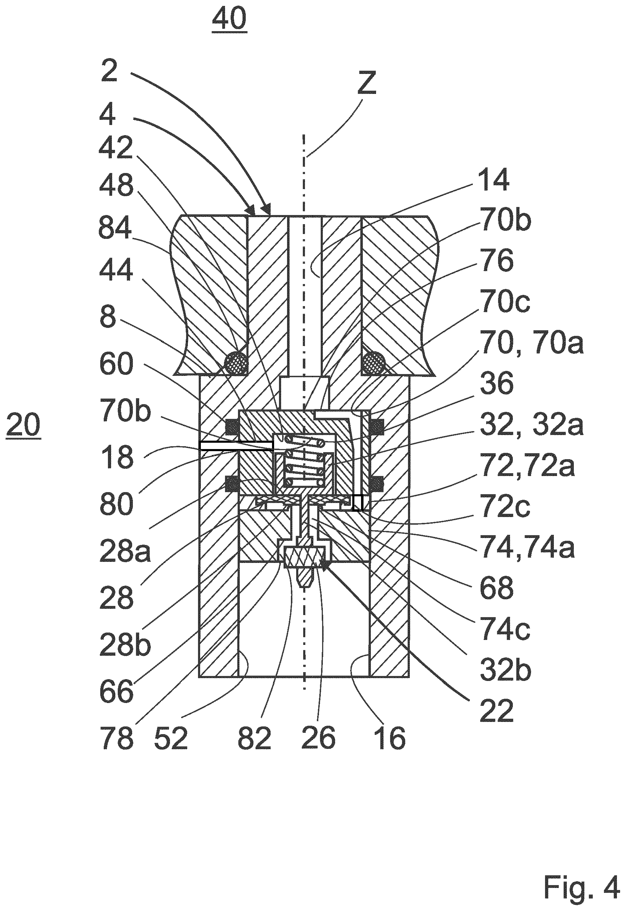

Fig. 4 zeigt eine weitere Ausführungsform des Ventils 2, wobei nun der Gehäusekörper 4 einteilig dargestellt ist und lediglich ein Gehäuseteil 8 mit Aufnahmeraum 52 umfasst. Zudem weist das Ventil 2 keinen Stößel 12 und kein erstes Dichtmittel 24 auf. Vielmehr öffnet das Ventil 2 bzw. das zweite Dichtmittel 26 immer automatisch, solange der Einlassdruck an der Ventilöffnung 16 größer als der Luftfederinnendruck an der Ventilöffnung 14 ist und der Luftfederinnendruck seinen Grenzwert noch nicht übersteigt. An der ersten Ventilöffnung 14 ist ein Bauteil 84, etwa ein Luftfedertopf, anordbar und kann gegenüber einer Umgebung mittels Dichtung 48 abgedichtet werden.

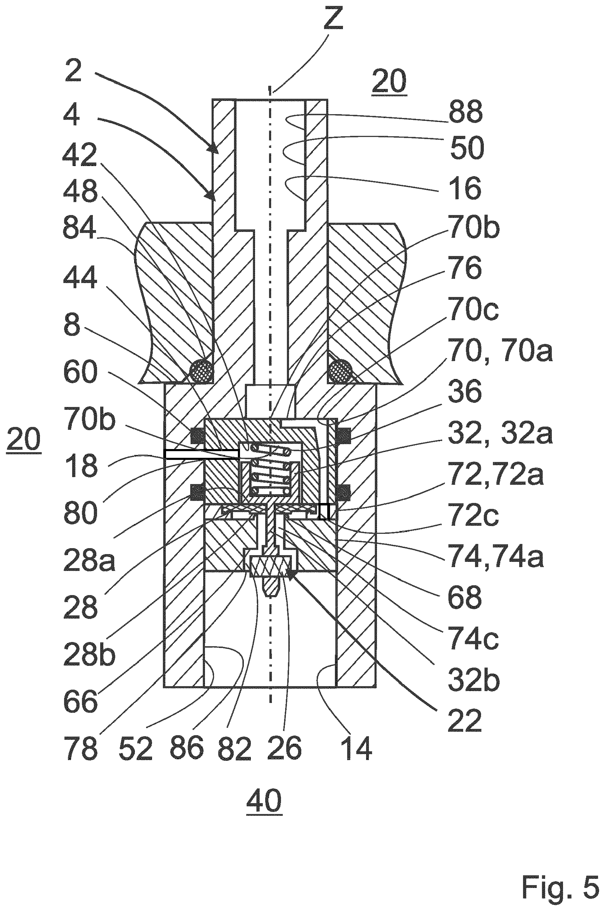

Fig. 5 zeigt eine weitere Ausführungsform des Ventils 2, wobei das Gehäuseteil 8 nun einen Durchtrittskanal 54 aufweist, der einen durchmessergrößeren Abschnitt 86 des Aufnahmeraums 52 mit einem weiteren durchmessergrößeren Abschnitt 88 des Aufnahmeraums 52 verbindet. Der Abschnitt 86 kann über die erste Ventilöffnung 14 an ein Luftfedervolumen 40 angeschlossen oder anschließbar sein und der Abschnitt 88 kann über die zweite Ventilöffnung 16 an eine Luftzufuhr angeschlossen oder anschließbar sein. Der Abschnitt 88 des Aufnahmeraums 52 kann derart gestaltet werden, dass er einen Luftanschluss aufnehmen kann. Ferner ist das zweite Dichtmittel 26 der in der Bildebene unten angeordneten ersten Ventilöffnung 14 bzw. dem Luftfedervolumen 40 zugeordnet. Die in das Luftfedervolumen 40 durch den Kanal 10 über die Ventilöffnung 14 einströmende Luft untergreift zunächst das dritte Dichtmittel 28, wirkt auf die Einwirkfläche 28b ein und führt so dazu, dass die dritte Dichtfläche 68 nicht länger den Luftstrom unterbindet. Vielmehr bewegt sich das Stellmittel 32 in der Bildebene nach oben gegen die Federkraft und gegen den im Gegendruckraum 42 herrschende Druck und gibt so den Kanalabschnitt 74c frei. Über die dritte Ventilöffnung 18 und den Nebenkanal 44 steht der Gegendruck, der den Grenzdruck definieren kann, an der der Einwirkfläche 28b gegenüberliegenden Fläche 28a des dritten Dichtmittels 28 an. Erst nach dem Durchströmen des Kanalabschnitts 74c umströmt der luftfedervolumeneinwärtsgerichtete Luftstrom das zweite Dichtelement 26. Dadurch, dass der Druck des luftfedervolumeneinwärtsgerichteten Luftstroms unmittelbar auf die Einwirkfläche 28b einwirkt bevor es das zweite Dichtelement 26 umströmt, führt ein Einlassdruck, der größer als der Grenzdruck ist, unmittelbar und sehr direkt zu einem Verschließen des Kanalabschnitts 74c durch das Druckbegrenzungsmittel 22 bzw. das zweite Dichtmittel 26. Dies erfolgt dadurch, dass die Zwangskopplung zwischen den Dichtmitteln 26, 28 bei Verstellung des Stellmittels 32 dazu führt, dass sich gleichsam auch das zweite Dichtmittel in Richtung seiner Schließstellung verstellt.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

| | | | |
|---|---|---|---|
| 2 | Ventil | 64 | erste Dichtfläche |
| 4 | Gehäusekörper | 66 | zweite Dichtfläche |
| 6 | erstes Gehäuseteil | 68 | dritte Dichtfläche |
| 8 | zweites Gehäuseteil | 70 | erstes Zylinderelement |
| 10 | Kanal | 70a | Zylinderwandung |
| 12 | Stößel | 70b | Zylinderboden |
| 14 | erste Ventilöffnung | 70c | Kanalabschnitt |
| 16 | zweite Ventilöffnung | 72 | zweites Zylinderelement |
| 18 | dritte Ventilöffnung | 72a | Zylinderwandung |
| 20 | Umgebung | 72c | Kanalabschnitt |
| 22 | Druckbegrenzungsmittel | 74 | drittes Zylinderelement |
| 24 | erstes Dichtmittel | 74a | Zylinderwandung |
| 26 | zweites Dichtmittel | 74c | Kanalabschnitt |
| 28 | drittes Dichtmittel | 76 | Begrenzungsmittelöffnungen |
| 28a | Einwirkfläche | 78 | Begrenzungsmittelöffnungen |
| 28b | Einwirkfläche | 80 | Begrenzungsmittelöffnungen |
| 30 | viertes Dichtmittel | 82 | Dichtmittelausnehmung |
| 32 | Stellmittel | 84 | Bauteil |
| 32a | Hohlzylinderabschnitt | 86 | Abschnitt |
| 32b | Dornabschnitt | 88 | Abschnitt |
| 34 | erste Feder | | |
| 36 | zweite Feder | Z | Zentrallängsachse |
| 38 | Ringkragen | | |
| 40 | Luftfedervolumen | | |
| 42 | Gegendruckraum | | |
| 44 | Nebenkanal | | |
| 46 | Klemmring | | |
| 48 | Dichtung | | |
| 50 | Aufnahmeraum | | |
| 52 | Aufnahmeraum | | |
| 54 | Durchtrittskanal | | |
| 56 | Schaft | | |
| 58 | Kopf | | |
| 60 | Dichtung | | |

## Patentansprüche

1. Ventil für eine Luftfeder, umfassend einen Gehäusekörper (4), der von einer Zentrallängsachse (Z) durchsetzt ist und einen Kanal (10) umfasst, wobei der Gehäusekörper (4) eine erste Ventilöffnung (14) aufweist, welche fluidisch an ein Luftfedervolumen (40) anschließbar ist, eine zweite Ventilöffnung (16) aufweist, welche fluidisch an eine Luftzufuhr anschließbar ist, wobei jede Ventilöffnung (14, 16) fluidisch mit dem Kanal (10) verbunden oder wahlweise verbindbar ist, **gekennzeichnet, durch** ein Druckbegrenzungsmittel (22), um den aus der zweiten Ventilöffnung (16) einströmenden Fluiddruck zu begrenzen, wobei das Druckbegrenzungsmittel (22) ein drittes Dichtmittel (28) und ein der zweiten Ventilöffnung (16) zugeordnetes und eine Öffnung wahlweise verschließbares zweites Dichtmittel (26) umfasst, welche zwangsgekoppelt sind, wobei eine Druckbeaufschlagung zumindest des dritten Dichtmittels (28) das zweite Dichtmittel (26) aufgrund der Zwangskopplung derart verstellt, dass es die entsprechende Öffnung verschließt oder den effektiven Öffnungsquerschnitt reduziert.

2. Ventil nach Anspruch 1, **dadurch gekennzeichnet, dass** das Ventil eine dritte Ventilöffnung (18) aufweist, welche einen Gegendruckraum (42) innerhalb des Gehäusekörpers (4) fluidisch über einen Nebenkanal (44) mit einer Umgebung oder einer Gegendruckquelle verbindet.

3. Ventil nach Anspruch 1 oder 2, **dadurch gekennzeichnet, dass** ein erstes Dichtmittel (24) vorgesehen ist, welches vorzugsweise von einem entlang der Zentrallängsachse (Z) verstellbaren Stößel (24) getragen ist, und welches der ersten Ventilöffnung (14) zugeordnet ist, um diese wahlweise zu öffnen oder zu verschließen.

4. Ventil nach einem der vorangehenden Ansprüche, **dadurch gekennzeichnet, dass** das Druckbegrenzungsmittel (22) im Kanal (10) angeordnet ist und/oder fluidisch zwischen zumindest zwei der Ventilöffnungen (14, 16, 18) angeordnet ist.

5. Ventil nach einem der vorangehenden Ansprüche, **dadurch gekennzeichnet, dass** das zweite Dichtmittel (26) fluidstromaufwärts des dritten Dichtmittels (28) angeordnet ist oder das dritte Dichtmittel (28) stromaufwärts des zweiten Dichtmittels (26) angeordnet ist.

6. Ventil nach einem der vorangehenden Ansprüche, **dadurch gekennzeichnet, dass** das Druckbegrenzungsmittel (22) ein Kraftspeichermittel umfasst, vorzugsweise eine Feder (36), welches das zweite Dichtmittel (26) in seine Offenstellung vorspannt.

7. Ventil nach Anspruch 2 oder einem der vorangehenden Ansprüche in Kombination mit Anspruch 2, **dadurch gekennzeichnet, dass** das Druckbegrenzungsmittel (22) das dritte Dichtmittel (28) umfasst, welches der dritten Ventilöffnung (18) zugeordnet ist, um diese bezüglich des Kanals (10) fluiddicht zu verschließen.

8. Ventil nach einem der vorangehenden Ansprüche, **dadurch gekennzeichnet, dass** das dritte Dichtmittel (28) und/oder ein viertes Dichtmittel (30) vorgesehen ist, welches der zweiten Ventilöffnung (16) zugeordnet ist, um diese bezüglich eines ventilauswärts gerichteten Fluidstroms wahlweise zu öffnen oder zu verschließen.

9. Ventil nach einem der vorangehenden Ansprüche, **dadurch gekennzeichnet, dass** das Druckbegrenzungsmittel (22) ein Stellmittel (32) umfasst, welches das zweite Dichtmittel (26) und/oder das dritte Dichtmittel (28) und/oder das vierte Dichtmittel (30) trägt und/oder von dem Kraftspeichermittel des Druckbegrenzungsmittels (22) vorgespannt ist.

10. Verwendung eines Ventils nach einem der Ansprüche 1 bis 9 als Einlassventil oder Kombiventil, vorzugsweise als Einlassventil oder Kombiventil einer Luftfeder, vorzugsweise einer Luftfeder eines Fahrzeuges, insbesondere Straßenfahrzeuges.
